# EUROPEAN PATENT SPECIFICATION

(11) **EP 3 885 116 B1**
(45) Date of publication and mention of the grant of the patent: **10.07.2024**
(21) Application number: 20165115.5
(22) Date of filing: 24.03.2020
(51) Int. Cl.: B29D 99/00, B29C 33/38, B29C 44/12, B29C 44/18, B29C 65/48, F03D 1/06, B29C 70/84

(54) **FLEXIBLE MANUFACTURING METHOD OF WIND ROTOR BLADES USING DEFORMABLE MATERIAL**
VERFAHREN ZUR FLEXIBLEN HERSTELLUNG VON WINDROTORSCHAUFELN UNTER VERWENDUNG VON VERFORMBAREM MATERIAL
PROCÉDÉ DE FABRICATION FLEXIBLE DE PALES DE ROTOR D'ÉOLIENNE À L'AIDE D'UN MATÉRIAU DÉFORMABLE

(43) Date of publication of application: 29.09.2021
(73) Proprietor: Siemens Gamesa Renewable Energy A/S, 7330 Brande (DK)
(72) Inventor: Henrichsen, Soeren Randrup Daugaard, 9310 Vodskov (DK); Nielsen, Mogens, 9220 Aalborg (DK)
(74) Representative: SGRE-Association

(56) References cited:
- EP-A1- 3 015 703
- WO-A1-2020/086600
- WO-A1-2020/089241
- NL-A- 9 100 816
- US-A1- 2008 075 603
- US-A1- 2011 211 969
- TSCHEGG E K ET AL: "Mode I fracturing properties of epoxy bonding paste", INTERNATIONAL JOURNAL OF ADHESION AND ADHESIVES, ELSEVIER, AMSTERDAM, NL, vol. 28, no. 7, 1 October 2008 (2008-10-01), pages 340 - 349, XP022638845, ISSN: 0143-7496, [retrieved on 20071113], DOI: 10.1016/J.IJADHADH.2007.08.006

## Description

### Field of invention

The present invention relates to the technical field of wind turbine blades.

### Art Background

During the prototyping of rotor blades for a wind turbine, some design changes are often required to optimize the product for the production process or due to other considerations. In the course, the trailing edge (TE) of the blade is often redesigned. This however can be rather difficult as the so-called trailing edge cores provide hard surfaces together with the mold shell, hereby limiting the freedom of the design because the geometry of the TE cores is the same for the prototype as for the serial production blades. This allows to minimize cost of the molds for the blades. However, it also means that the TE cores are finalized early in the design process, where the full blade is not yet mature. Hence a very strict constraint is given early in the design process, which has a rather large impact on the remaining blade design.

US 2011/0211969 A1 describes a wind turbine blade, which includes an upper shell member and a lower shell member with an internal cavity therebetween. The shell members are joined at leading and trailing edges of the blade with a bond paste along a bond line having a designed width. A sleeve is disposed within the internal cavity between the upper and lower shell members along at least one of the leading or trailing edges, with the bond paste contained within the sleeve. The sleeve has a closed end that is impermeable to the bond paste and opposite sides that are permeable to air and permeable to the bond paste. The bond paste adheres to the upper and lower shell members through the sleeve sides and the closed end of the sleeve defines the design width of the bond line in the internal cavity.

Accordingly, there may be a need for rotor blades with a flexible manufacturing process allowing for example for more variability in the design of the trailing edges and by analogy of other parts of the rotor blades for a wind turbine.

### Summary of the Invention

This need may be met by the subject matters according to the independent claims. Advantageous embodiments of the present invention are described by the dependent claims.

According to an aspect of the invention, a method of manufacturing a rotor blade as defined in claim 1, in particular a rotor blade for a wind turbine, is described. The method comprises (i) forming an outer shell portion of the rotor blade at least partially surrounding a cavity, (ii) arranging a deformable material in the cavity, and (iii) hardening the deformable material in the cavity. In the process, the shape of the deformable material adapts to the shape of the cavity, in particular when the deformable material is arranged in the cavity and/or when the deformable material is hardened in the cavity. The method may further comprise forming an outer shell comprising the outer shell portion. It may further comprise casting and/or hardening the outer shell.

According to a further aspect of the invention, an intermediate-product rotor blade for a wind turbine as defined in claim 13 is described. The intermediate-product rotor blade comprises (i) an outer shell portion of the intermediate-product rotor blade, (ii) a cavity at least partially surrounded by the outer shell portion, and (iii) a deformable material arranged in the cavity. The deformable material is configured to be melted before being hardened in the final-product rotor blade adapting its shape to the shape of the cavity.

According to a further aspect of the invention, a rotor blade as defined in claim 13, in particular a final-product rotor blade, for a wind turbine is described. The rotor blade comprises (i) an outer shell portion of the rotor blade, (ii) a cavity at least partially surrounded by the outer shell portion, and (iii) a hardened material arranged in the cavity, wherein the hardened material has been hardened in the cavity. The shape of the hardened material is adapted to the shape of the cavity.

The hardened material has been melted before being hardened in the cavity.

In the context of the present application, a "wind turbine" is any device that is configured to convert wind energy into electrical energy, in particular for distribution to a grid and/or for local energy supply. A wind turbine may comprise a tower, a wind rotor, a nacelle, a shaft, in particular a low-speed shaft and/or a high-speed shaft, a gearbox, a generator, a brake assembly, a pitch drive, and/or a yaw drive. The wind rotor may be a rotor assembly and may comprise one or more rotor blades and a central hub, to which the blades are attached. The wind rotor may further comprise a pitch bearing connecting the rotor hub with the blade. With the pitch bearing, an orientation of the blades may be adjustable, in particular an angle of attack of the blades.

The "rotor blade" may be a blade of a wind rotor of the wind turbine. A rotor blade may comprise a base portion, e.g. of essentially cylindrical shape, with which the rotor blade is attached to the central hub. A tip of the rotor blade may form the outermost part of the blade. Between the base portion and the tip, an airfoil portion of the rotor blade may be aerodynamically adapted for the operation of the wind turbine. A profile or cross-section of the airfoil portion may extend between a rounded leading edge, at which at least some of the airflow may impact on the blade, and a trailing edge opposite the leading edge. At a suction side of the blade extending between the leading edge and the trailing edge, the pressure may be smaller than at a pressure side extending between the leading edge and the trailing edge opposite the suction side.

The term "trailing edge" of the rotor blade may denote an outer end of the rotor blade in a profile or cross-section of the rotor blade. The trailing edge may extend along the blade at least in the airfoil portion of the blade. It may extend from the tip to the base portion. The trailing edge may designate an outer region of the rotor blade in the profile or cross-section of the rotor blade. It may designate a region, in which the trailing edge core is arranged. The trailing edge may comprise an outer shell portion, the trailing edge core and/or a web, which may delimit the trailing edge inside the blade. At the trailing edge, an airflow from the suction side and the pressure side may recombine, in particular an airflow separated at the leading edge.

An "outer shell" of the rotor blade may be an outer covering of the rotor blade. It may be a covering of the rotor blade forming at least part of an outer or exposed surface of the rotor blade. The outer shell may be a rigid outer layer of the rotor blade, which may be adjacent to a deformable layer and/or to a hollow space. The outer shell may consist of an outer laminate of a rotor blade. The outer shell may comprise the outer laminate of a rotor blade, a laminate core such as balsa wood or foam, and/or an inner laminate of the rotor blade. The laminate core may be a core material. The outer laminate, the laminate core and the inner laminate may form a sandwich structure of the rotor blade. The outer shell may refer to an outer shell before casting or to an outer shell after casting. Thus, the outer shell may be cured or hardened or it may not be cured or hardened.

The outer shell may refer to a lay-up or a plurality of layers, which may for example be arranged at the outer surface of a rotor blade and/or on a mold of the rotor blade. The outer shell may consist of or comprise the outermost layer. The outer shell may comprise all layers, which are arranged on the surface of the mold before the casting of the blade. The outer shell may comprise reinforcement layers, in particular layers comprising fabrics of fibers, e.g. glass fibers and/or carbon fibers. The layers may comprise layers preimpregnated with resin, layers that are not preimpregnated and/or layers with cured resin.

The outer shell comprises the "outer shell portion". The outer shell portion may extend along the cavity, in particular only along the cavity. The outer shell portion may be directly adjacent to the cavity and/or it may be separated from the cavity by an intermediate layer of interposed material. The outer shell portion may be directly adjacent to the deformable material and/or may be separated from the deformable material by an intermediate layer. The outer shell portion may be located in the trailing edge of the blade and/or adjacent to a spar of the rotor blade, e.g. to each side of the spar of the rotor blade. The outer shell portion may comprise parts of the outer shell at the pressure side and/or the suction side of the blade. It may be an outer shell portion extending from the pressure side around the trailing edge to the suction side.

A "cavity" may be a hollow or unfilled space. The term cavity may also refer to a previously hollow space filled with the deformable material, in particular only with the deformable material and possibly a rigid core layer. The cavity may be at least partially surrounded by the outer shell portion. All of the outer shell portion may surround the cavity. The cavity may be fully surrounded or enclosed by an outer shell and/or an inner wall of the rotor blade, e.g. a side web. The inner wall may extend between the suction side and the pressure side of the blade, in particular between the outer shell at the suction side and the outer shell at the pressure side. If the cavity is adjacent to the trailing edge, the inner wall may delimit the cavity opposite the trailing edge.

"Arranging" material in a cavity may refer to first forming part of an inner surface of the cavity, arranging the material on that part of the inner surface and then forming a further part of the inner surface of the cavity, in particular fully enclosing the cavity. It may also refer to first forming the cavity completely and then arranging the material in the cavity. Arranging material in a cavity may refer to arranging solid material in the cavity and/or filling liquid material into the cavity, in particular through one or more openings of the cavity.

A "deformable material" may be any material which is able to change its size and/or shape, in particular in response to forces applied to the material. The deformable material may be a flexible material. It may be a non-rigid material. Deformations of the deformable material may be elastic, i.e. reversible, and/or they may be plastic, i.e. at least to some degree irreversible, in particular fully irreversible. In a plastic deformation, a permanent deformation may remain, when the deforming force ceases to act, while in an elastic deformation, the deformation may disappear in the absence of the deforming force. Deformability may result because the deformable material consists of a plurality of particles, e.g. granules, which may be freely movable with respect to each other. The deformability may result because the deformable material consists of or comprises a soft, e.g. spongy, material, a liquid material and/or a gaseous material.

The deformable material may be deformable by forces of an order of magnitude acting, when a rotor blade mold is assembled and/or when a rotor blade is cast. The deformable material may be deformable under the influence of gravity. The deformable material may be deformable under atmospheric pressure and/or at room temperature. Above a threshold temperature such as a glass transition temperature or a phase transition temperature, e.g. from solid to liquid or from liquid to gaseous, the nature of deformability of the deformable material may change.

The deformable material may comprise or consist of a granular material, a powdery material, a liquid, a gas, a paste and/or a soft material. The deformable material may comprise or consist of a glassy material, i.e. an amorphous solid exhibiting a glass transition temperature, in particular granules of glassy material. The deformable material may comprise or consist of a thermoplastic material and/or a thermosetting material, in particular granules of thermoplastic material and/or granules of thermosetting material.

"Hardening the deformable material" may refer to a process in which the material becomes less deformable, in particular becomes rigid, e.g. at room temperature and under atmospheric pressure. The deformable material may be hardened by the application of pressure and/or heat to the deformable material. The deformable material may be hardened by first melting the material, e.g. by applying pressure and/or heat, and subsequently hardening the material. In the present context, melting may refer to a glass transition, e.g. from a hard and relatively brittle glassy state to a viscous or rubbery state, and/or to a solid-liquid transition. Melting may occur at a threshold temperature, e.g. a glass transition temperature or a phase transition temperature from solid to liquid. A hardening of a granular material may result, if at least some of the granules of the granular material are fused together.

When hardening the deformable material in the cavity, it may intermingle with the surrounding material. By contrast, a hardened material arranged in a cavity may not intermingle with the surrounding material, e.g. during the casting of the blade. This may allow to determine in a final-product rotor blade, whether a deformable material has been used as opposed to a rigid material.

Hardening the deformable material may be a process that differs from the casting of the blade, in particular from the casting of the outer shell of the blade. It may be different in that the temperature at which the deformable material melts and/or hardens differs from the temperature at which the casting material melts and/or hardens, respectively. In particular, the melting temperature, e.g. a glass transition temperature, of the deformable material may be smaller than the melting temperature of the casting material.

The deformable material may differ from a casting material. The deformable material may be arranged, when the mold of the blade is not yet completely assembled. The casting material may be fed to the mold only when the mold is fully assembled. The casting material may be a liquid material filled into the mold during casting and/or it may be a viscous material in the mold, which is cured or hardened during casting. The casting material may comprise or consist of a resin material such as epoxy resin. Casting may comprise a resin infusion technology such as resin transfer molding or vacuum assisted resin transfer molding. In the latter, resin may be injected under vacuum or at least at a pressure lower than atmospheric pressure using a vacuum bag.

The steps of forming the outer shell portion, of arranging the deformable material and/or of hardening the deformable material may be carried out inside or outside a main mold used for casting the blade. When formed outside the main mold, the outer shell portion may comprise a laminate around the deformable material, an outer laminate of a sandwich structure, the laminate core of the sandwich structure, and/or the inner laminate of the sandwich structure.

That "the shape of the deformable material adapts to the shape of the cavity" may mean that the deformable material at least partially fills the cavity, in particular fills 90% of the cavity, in particular fills 99% of the cavity, in particular completely fills the cavity. Alternatively or additionally, it may mean that the deformable material adapts to an inner surface of the cavity, when it is arranged inside the cavity and/or when the cavity is closed after arranging the material. The adaptation may occur at least partially, in particular fully, when the deformable material is arranged in the cavity. The adaptation may occur at least partially, in particular fully, when the deformable material is hardened in the cavity. The adaptation may occur at least partially, in particular fully, when the deformable material is melted in the cavity before being hardened.

In the present context, an "intermediate-product rotor blade" is a rotor blade that is not fully manufactured, e.g. which requires further processing steps such as a casting step to become a "final-product rotor blade". The intermediate-product rotor blade may not be fully functional. It may lack essential materials, parts and/or structures of the final-product rotor blade. The "final-product rotor blade" is a fully manufactured rotor blade. It may be fully functional, in particular may be configured to be used in a fully operable wind turbine. The final-product rotor blade may be producible from an intermediate-product rotor blade by further processing the intermediate-product rotor blade.

An advantage of the above-described method of manufacturing and/or of the above-described rotor blades may lie in the use of deformable material during the manufacturing of the rotor blades. Using deformable material for specific parts of the rotor blade may allow for these parts to easily adapt to the surrounding structure of the rotor blade during manufacturing. Thus, parts with deformable material may be particularly versatile, e.g. so that they can be used in rotor blades of different designs and/or during the design process of rotor blades.

Furthermore, parts of the rotor blade where the deformable material is used may be producible without a separate casting process. Thus, they may be producible without requiring separate molds, with which these parts are separately casted. Specifically, the parts may be producible in the mold of the rotor blade, e.g. during the casting of the rotor blade. As examples, a trailing edge core or parts of a mandrel may be produced in this way. Therefore, the production of these parts or portions of the rotor blade may be particularly efficient and economical.

According to an embodiment of the invention, the cavity is adjacent to a trailing edge of the rotor blade. The cavity may be directly adjacent to an outer shell of the rotor blade at the trailing edge. The cavity may be directly adjacent to an outer shell on the suction side and/or an outer shell on the pressure side of the blade at or near the trailing edge. The deformable material in the cavity, in particular when it is hardened, may form a trailing edge core. The trailing edge core may be a space filler in the trailing edge and/or it may have a load-carrying function in the trailing edge. It may have the load-carrying function only after being hardened.

The steps of forming the outer shell portion, of arranging the deformable material and/or of hardening the deformable material may be carried out inside or outside a main mold used for casting the blade. For example, the trailing edge core can be combined in a trailing edge assembly, which may be manufactured outside the main mold, and then inserted into the main mold. The trailing edge assembly may consist of a laminate around the trailing edge core, potentially a part of a sandwich structure, and the trailing edge core. Such a trailing edge assembly could be a pre-formed trailing edge. According to a further embodiment of the invention, the deformable material forms part of a mandrel. It may form part of an outer region of the mandrel, in particular a region forming an outer surface portion of the mandrel. It may be arranged near the trailing edge and/or adjacent to a spar of the rotor blade, in particular in or near a region, where the spar joins an outer shell of the rotor blade. In such an embodiment, the deformable material may enable a more precise mandrel geometry, in particular enable the mandrel to better represent the inner geometry of the blade.

According to a further feature, not being part of the invention, the rotor blade is a prototype rotor blade, in particular a prototype rotor blade that is used in a design process of a serial-production rotor blade. A "prototype rotor blade" may be any rotor blade that is usable for designing rotor blades. A "serial-production rotor blade" may be any rotor blade produced in series, wherein more than one motor blade of the same kind is produced more than once, in particular in large numbers. In serial production, the design of the rotor blade may be fixed.

A prototype rotor blade may differ from a serial-production rotor blade in that the former may not be fully operable in a wind turbine, in particular operable for a longer period of time and/or under typical operating conditions. Accordingly, the prototype rotor blade may not have the full functionality of a serial-production rotor blade. The prototype rotor blade may have the same design and/or the same aerodynamical properties as the corresponding serial-production rotor blade. It may be less durable and/or stable than the corresponding serial-production rotor blade. The prototype rotor blade may comprise other materials than the serial-production rotor blade. In particular, the corresponding serial-production rotor blade may lack the deformable material. The prototype rotor blade may allow functional and/or design changes at later stages of the manufacturing process than the corresponding serial-production rotor blade. The use of the deformable material in a prototype rotor blade may allow for functional and/or design changes at later stages of the manufacturing process than in a similar prototype rotor blade without the deformable material.

Using a deformable material may render the design process more flexible as changes in the design can be implemented more easily as long as the material remains deformable compared with a rigid material. Since during prototyping design changes are frequently required, while in serial production design changes are typically absent, the use of a deformable material may be particularly advantageous in a prototype rotor blade. As an example, using a deformable material adjacent to the trailing edge may be particularly advantageous for a prototype rotor blade, since the trailing edge is a complex item, the design of which may need to be changed at later stages of the design process for an optimized design and/or for production-friendly blades. The design changes can be based on findings during prototyping.

According to a further embodiment of the invention, the deformable material is isotropically deformable. For isotropic deformability, a material may react in the same way to an external force on the material no matter from which direction the external force is applied. An isotropically deformable material may have the same amount of flexibility in all dimensions. For example, a material comprising fibers or rovings will typically not be isotropically deformable, at least if the fibers or rovings are arranged with an anisotropic distribution in the material. Equally, planar or layer-like meshes, e.g. of fibers, are not isotropically deformable. By contrast, a granular material will typically be isotropically deformable, at least if the granules are arranged with an isotropic distribution. Also, a fluid, e.g. a liquid or gas, in particular a viscous resin or a melted resin, is typically isotropically deformable.

The isotropically deformable material may be isotropically elastically deformable and/or isotropically plastically deformable. If the isotropically deformable material is in a bag, the bag need not be isotropically deformable. The deformability of the bag in different dimensions may depend on its geometry and/or the material in the bag. Furthermore, if the isotropically deformable material is a granular material, the individual granules need not be isotropically deformable. In fact, the individual granules may be isotropically deformable, anisotropically deformable or rigid.

An isotropically deformable material may be advantageous for filling cavities, because the isotropically deformable material may better adapt to various shapes of cavities compared with an anisotropically deformable material. An isotropically deformable material may be particularly advantageous for those parts of a rotor blade, which do not serve any structural function and/or which act mainly as space fillers.

According to a further embodiment of the invention, the deformable material comprises or consists of a granular material. A granular material may be a granulate. A granular material may comprise or consist of a plurality of discrete, macroscopic particles, so-called granules or grains. These particles may be large enough so that they are not subject to thermal fluctuations, i.e. Brownian motion. The granules may have different sizes and/or different forms. They may also have the same size and/or the same form. The granules may have an average extension between 0,01 mm and 10 cm, in particular between 0,5 mm and 5 cm. A granular material may be a powder. Spaces between the individual granules may be filled by a gas, in particular air, or by a liquid.

Granular material may be advantageous because it may be easily transportable, e.g. as easily transportable as sand or gravel. For this reason, plastics, in particular thermoplastics, are frequently delivered by raw material manufacturers in granular form. Therefore, granular material may be easily available at low cost without any additional preprocessing.

According to a further embodiment of the invention, the granular material comprises at least one of cylindrical granules, spherical granules and flaky granules. Different forms and/or sizes of granules may be combined, e.g. to yield a material with desired properties.

Cylindrical granules may be advantageous because they may be especially simple to produce and thus cheaply available. For example, granular material may be produced as strands, which are subsequently cut into small cylindrical pieces. Spherical granules may be advantageous because they may adapt more easily to the shape of a cavity than other forms of granules. Flaky or plate-shaped granules may allow for a particularly compact composition of the granular material, e.g. with smaller spaces between the granules compared with other forms of granules.

According to a further embodiment of the invention, the deformable material comprises an additive and/or a chemical, which causes the deformable material to expand upon heat activation. The additive and/or chemical may cause the deformable material, when being heated, to expand more than the deformable material without the additive and/or chemical. The coefficient of thermal expansion of the deformable material may increase due to the additive and/or chemical. For example, the additive and/or chemical may cause the granules of a granular material to expand upon heat activation. Such an embodiment may be advantageous, because the additional expansion of the deformable material may contribute to the filling of the cavity, e.g. may ensure a complete filling of the cavity.

According to a further embodiment of the invention, arranging the deformable material in the cavity comprises at least one of (i) arranging at least two types of deformable material in the cavity so that the at least two types of deformable material are spatially separated, in particular arranged in different layers, and (ii) arranging a rigid core layer in the cavity adjacent to the deformable material.

The different types of deformable material may differ in at least one of a glass transition temperature, a hardening or curing temperature, a chemical composition, a density and a measure of deformability such as elasticity or plasticity. If the deformable material is a granular material, the types of material may differ in the average size of the respective granules. They may have different distributions for the size and/or form of the material. They may differ only with respect to size and/or form of the granules.

The above-described embodiment may be advantageous, because different properties of a filling material may be required for different parts of the cavity. For example, a different extent of deformability may be required, e.g. in order to better adapt the shape of the deformable material to the cavity. Or different melting temperatures of the deformable material may be required, e.g. because the casting temperature of the blade may differ across the blade and accordingly across the cavity.

The different types of material may be arranged in two or more layers of material. For example, a fine-grained layer may be arranged above a coarse-grained layer in the cavity. Having a fine-grained layer on the top may render the deformable material more easily adaptable to the shape of the cavity.

According to a further embodiment of the invention, arranging the deformable material in the cavity comprises arranging at least one bag containing at least some of the deformable material in the cavity. All deformable material may be arranged in the cavity in bags. Some deformable material may be arranged in bags, some without bags. Using bags may of course be advantageous for an efficient placement of the deformable material in the cavity. Bags may enable an efficient handling and positioning of the deformable material.

The dimensions of the bag may be adapted to the shape of the cavity. The bag may be adequately sized to allow for rapidly filling the cavity. The size of the bag may be such that it can be easily handled by an operator. For example, the bag may be smaller than two meters in all dimensions. The bags may be at least partly, in particular fully dissolvable, e.g. during the melting and/or hardening of the deformable material and/or during the casting of the blade.

According to a further embodiment of the invention, the bag has a plurality of holes, wherein the holes are small enough to prevent the deformable material from leaking. For example, if the deformable material is a granular material, the holes may be smaller than an average extension of the granules. The holes may allow casting material such as resin, e.g. from the deformable material, to flow out of the bag thus providing a source of casting material. The holes may serve for ventilation, e.g. to let gases escape which may for example be generated during the melting and/or hardening of the deformable material.

According to a further embodiment of the invention, arranging the at least one bag in the cavity comprises arranging at least two bags in the cavity wherein each of the bags contains a different type of deformable material. Each bag arranged in the cavity may contain a different type of deformable material or some of the bags arranged in the cavity may contain the same type of deformable material. The bags may be coded, e.g. color-coded, to inform an operator of the type of material contained in the bag. Different types of deformable material may differ in at least one of a glass transition temperature, a hardening or curing temperature, a chemical composition, a density and a measure of deformability such as elasticity or plasticity. Such an embodiment may for example be advantageous, if different materials are required at different parts of the cavity, e.g. if the casting temperature differs at different parts of the blade, for example along the trailing edge.

According to the invention, the method further comprises melting the deformable material before hardening the deformable material. This is advantageous, if the deformable material is in a solid state, when it is arranged in the cavity, for example if the deformable material comprises or consists of solid granules. Melting may be required for the deformable material to dissolve in order to form a continuous body after hardening. During the melting and subsequent hardening, different particles of the deformable material, e.g. different granules, may fuse with each other.

According to a further embodiment of the invention, melting the deformable material comprises heating the deformable material to a melting temperature, in particular a glass transition temperature, wherein the melting temperature is smaller than a casting temperature of the rotor blade, in particular of the outer shell of the rotor blade. Such an embodiment may be advantageous because the melting and hardening of the deformable material may occur automatically during the casting of the blade. However, the melting temperature may also be equal to the casting temperature or may even be larger than the casting temperature. The melting temperature may match the casting temperature.

Some embodiments have been described with reference to method type claims whereas other embodiments have been described with reference to apparatus type claims. However, a person skilled in the art will gather from the above and the following description that, unless otherwise indicated, any combination of features relating to method type claims and of features relating to apparatus type claims, is disclosed with this document.

The aspects defined above and further aspects of the present invention are apparent from the examples of embodiment to be described hereinafter and are explained with reference to the examples of embodiment.

### Brief Description of the Drawings

Figure 1 shows a cross section of a trailing edge of a rotor blade comprising a cavity with a deformable material according to an exemplary embodiment of the invention.
Figure 2 shows a perspectival view of a bag enclosing a deformable material according to an exemplary embodiment of the invention.
Figure 3 shows an operating person positioning a bag with deformable material in a mold for a rotor blade according to an exemplary embodiment of the invention.
Figures 4 to 7 show different types of granular material according to exemplary embodiments of the invention.
Figure 8 shows granular material arranged in different layers in a bag according to an exemplary embodiment of the invention.
Figure 9 shows a cross section of a trailing edge of a rotor blade comprising a cavity with deformable material arranged in different layers and around a rigid core layer according to an exemplary embodiment of the invention.
Figure 10 shows a cross section of a rotor blade with mandrels arranged in the rotor blade comprising regions of deformable material according to an exemplary embodiment of the invention.

### Detailed Description

The illustrations in the drawings are schematic. In different drawings, similar or identical elements are provided with the same reference signs. For the sake of clarity and comprehen-sibility, reference signs are sometimes omitted for those features, for which reference signs have already been provided in earlier figures.

Before, referring to the drawings, exemplary embodiments will be described in further detail, some basic considerations will be summarized based on which exemplary embodiments of the invention have been developed.

A method is described to allow for large redesign of the trailing edge (TE) cores without losing the general feature of the TE cores as space fillers. This allows to finalize the TE cores after prototyping without any significant cost increase, hereby, moving a critical item to a late stage in the design phase which will provide a more optimal design.

Normally the TE core geometry is frozen when the core material in the panel or sandwich structure of the outer shell is determined, e.g. the balsa thicknesses are defined, and the TE beam overall layup is frozen. This is a part of the edgewise design of the blade. Hereby the blade design is locked down, making it difficult to do larger modifications to especially the edgewise design. From this, molds for the TE cores are manufactured and the TE cores for the blades can be casted.

In the proposed flexible TE core design, the TE core is placed in a casted blade where it adapts to the shape of the trailing edge. The concept is a flexible or deformable material, e.g., a granulate, which is enclosed in a bag. During the casting of the blade, the heat generated will make the TE core adapting to the trailing edge shape hereby filling the space in the trailing edge.

Standard granulate material, i.e. cylindrical of the same or different length and thickness, may be used and in any case with a glass transition (TG) temperature value that matches a given casting temperature of the blade. In another embodiment, the granules may be of any form or shape. The granules could also be pre-mixed with a chemical(s) that causes the granules to expand upon heat activation. Mixing of different shapes in a layered fashion is also an option with two or more layers in the bag, e.g. coarse sized granules at a bottom layer, relatively speaking, and a layer of fine granules at a top layer to make it more flexible.

The proposed TE cores may increase the flexibility of the TE design, hereby making it possible to have larger redesigns of the trailing edge during prototyping without imposing additional costs. Furthermore, it moves the design of a complex item to a late stage in the blade design, which allows for a more optimized design.

Since the TE cores become flexible it is possible to have more adjustments of the design based on the findings during prototyping. Furthermore, the flexible cores can be used across blades since only the volume and not a geometry of the cores is fixed.

A further advantage may be that it is possible to make more production friendly blades without the cost related to changing the permanent molds for the blade.

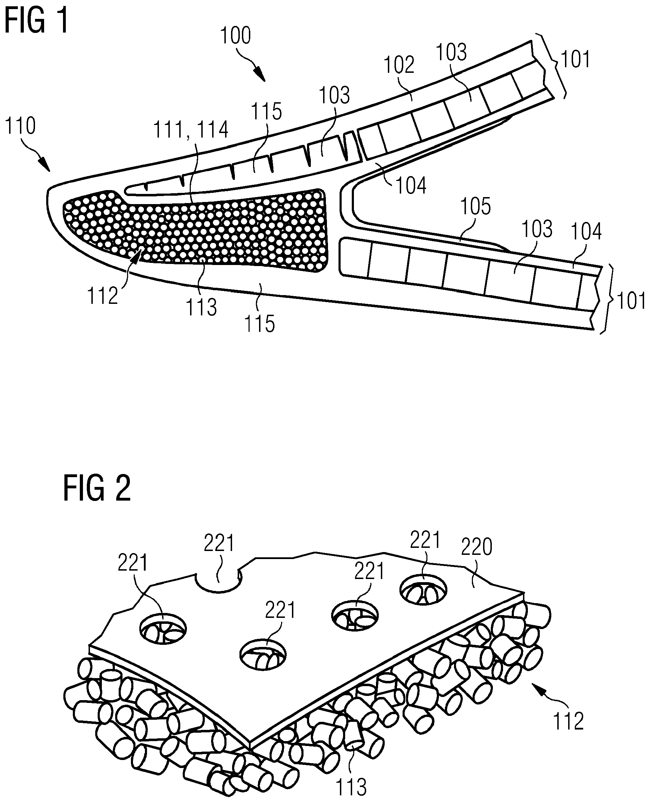

**Figure 1** shows a cross section of a trailing edge 110 of a rotor blade 100 comprising a cavity 114 with a deformable material 112. Specifically, the trailing edge 110 shown in Fig-ure 1 forms part of an intermediate-product rotor blade 100 for a wind turbine, which comprises (i) an outer shell portion 115 of the intermediate-product rotor blade 100, (ii) a cavity 114 at least partially surrounded by the outer shell portion 115, and (iii) a deformable material 112 arranged in the cavity 114. The deformable material 112 is configured to be hardened in the final-product rotor blade 100 adapting its shape to the shape of the cavity 114.

The cavity 114 is adjacent to the trailing edge 110 of the rotor blade 100. The outer shell portion 115 partially surrounding the cavity 114 forms part of the outer shell 101. The outer shell 101 comprises an outer laminate 102, a laminate core 103 and an inner laminate 104. Close to the trailing edge 110 and possibly elsewhere, the outer shell 101 consists only of the outer laminate 102. Towards the inside of the rotor blade 100, the cavity 114 is delimited by a side web 105. The cavity 114 is filled with deformable material 112 comprising a plurality of granules 113 thus forming a trailing edge core 111.

**Figure 2** shows a perspectival view of a bag 220 enclosing a deformable material 112, which comprises granules 113. The bag 220 has holes 221. The size of these holes 221 is of the same order of magnitude as an average extension of the granules 113.

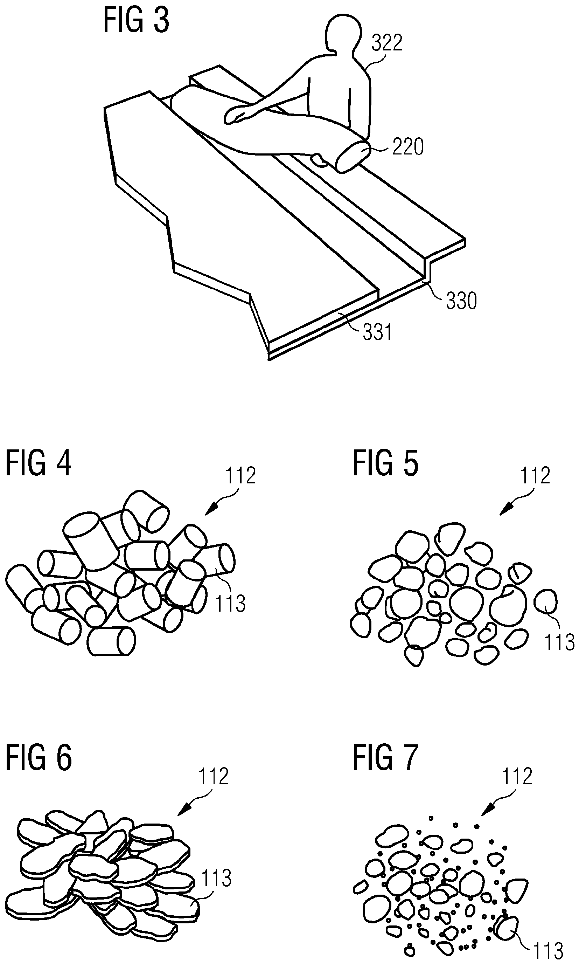

**Figure 3** shows an operating person 322 positioning a bag 220 of deformable material 112 in a mold 330 of a rotor blade 100, in particular a lower mold part of the mold 330 of the rotor blade 100. The size of the bag 220 is of the same order of magnitude as the operating person 322. The bag 220 is shaped to fit into the mold 330 at the trailing edge 110 of the rotor blade 100. The bag 220 is column-shaped with a cylindrical or oval cross-section. Both ends of the bag 220 are flat.

On the inner surface of the mold 330, a lay-up 331 of one or more layers is arranged. These layers may comprise reinforcement layers, e.g. layers of fabrics of fibers. They may further comprise polymer foams or balsa wood to form sandwich structures. Although not shown in Figure 3, a lay-up 331 is also present at the trailing edge 110 of the mold 330. The composition of the lay-up 331 at the trailing edge 110 may differ from the lay-up 331 at other parts of the rotor blade 100. The lay-up 331 may comprise the outer shell 100, in particular the outer laminate 102, the laminate core 103 and/or the inner laminate 104.

Figure 3 shows how the proposed TE cores 111 are placed in the mold 330. They are given a discrete length, which is long enough to provide a rapid process, but short enough to be easy to handle. A multiple of the bags 220 are placed in the trailing edge 110, hereby fulfilling the purpose of the TE cores 111.

**Figures 4 to 7** show different types of granular deformable material 112. The granular material of Figure 4 comprises cylindrical granules 113, which may be of the same or of different lengths and/or thicknesses. Such granular material may be standard granular material. The granular material of Fig-ure 5 comprises spherical granules 113, which may again be of the same or of different sizes. Such granular material may be particularly adaptable. The granular material of Figure 6 comprises flaky, flake-shaped or plate-shaped granules 113. These may be of the same or of different widths, lengths and/or thicknesses. Such granular material may be particularly compact. Finally, Figure 7 shows a mixed granular material comprising granules 113 of any form or shape.

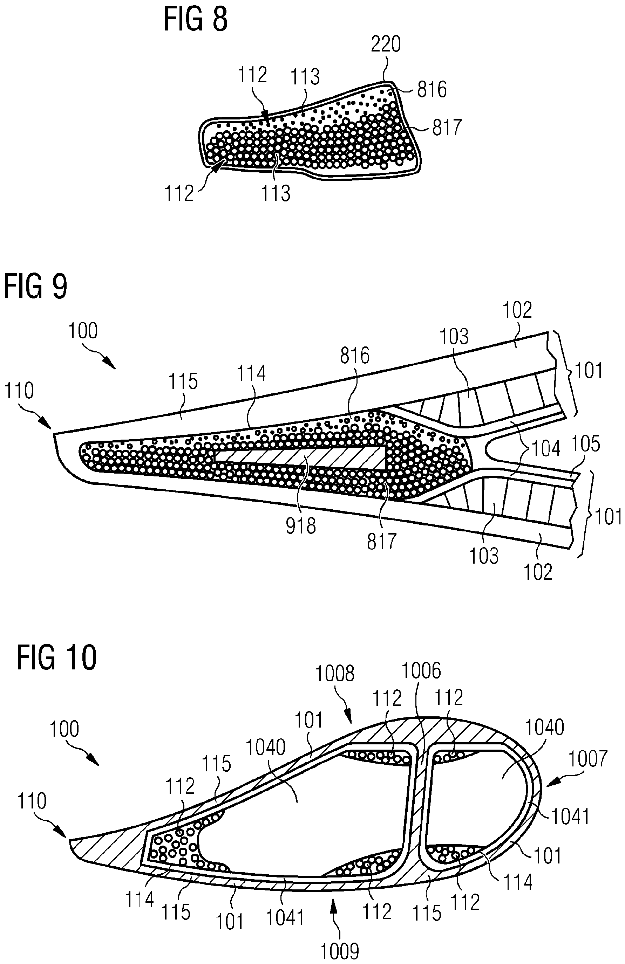

**Figure 8** shows granular deformable material 112 arranged in different layers 816, 817 in a bag 220. A fine-grained layer 816 of fine granules 113 is arranged above a coarse-grained layer 817 of coarse granules 113. The fine-grained layer 816 is much thinner than the coarse-grained layer 817, e.g. less than half as thin.

**Figure 9** shows a cross section of a trailing edge 110 of a rotor blade 100 comprising a cavity 114. The cavity 114 is filled with deformable material 113 arranged in different layers 816, 817 and arranged around a rigid core layer 918. As in Figure 8, a fine-grained layer 816 is arranged above a coarse-grained layer 817. The fine-grained layer 816 is again much thinner than the coarse-grained layer 817. The fine-grained layer 816 takes up only an upper edge portion of the cavity 114. The rigid core layer 918 has a triangular cross-section broadly replicating the shape of the trailing edge 110. The rigid core layer 918 is embedded completely within the coarse-grained layer 817. Otherwise, the configuration of the trailing edge 110 of Figure 9 is similar to the configuration shown in Figure 1.

**Figure 10** shows a cross section of a rotor blade 100 with two mandrels 1040 arranged in the rotor blade 100. The rotor blade 100 has a sharp trailing edge 110 and a rounded leading edge 1007 opposite the trailing edge 110. An outer surface of the rotor blade 100 extending between the trailing edge 110 and the leading edge 1007 defines the suction side 1009 of the rotor blade 100. The outer surface opposite to the suction side 1009, also extending between the trailing edge 110 and the leading edge 1007, defines the pressure side 1008 of the rotor blade 100.

The mandrels 1040 are used during the casting of the rotor blade 100, in particular the casting of the outer shell 101 of the rotor blade 100 and possibly the spar 1006. The outer shell 101 may comprise an outer laminate 102, a laminate core 103 and/or an inner laminate 104. The spar 1006 may be a main structural member of the rotor blade 100 extending along the rotor blade 100 in direction from the base portion to the tip of the rotor blade 100. Between mandrel 1040 and the rotor blade 100, in particular the outer shell 101 and/or the spar 1006 of the rotor blade 100, there may be an unfilled space, which may be under vacuum. In addition or alternatively, a vacuum bag 1041 may be at least partially arranged between mandrel 1040 and rotor blade 100. The vacuum bag 1041 may be used to consolidate the laminate during casting, e.g. consolidate the laminate of the outer shell 101 and/or of the spar 1006.

The mandrels 1040 comprise regions of deformable material 115. These regions correspond to respective cavities 114 filled with deformable material 112. Such regions may be arranged adjacent to the trailing edge 110 and/or adjacent to connection regions between spar 1006 and outer shell 101. The respective cavities 114 in those connection regions may be at least partially surrounded by a corresponding outer shell portion 115, a portion of the spar 1006 and/or parts of the mandrel 1040.

These regions of deformable material 115 may form part of the mandrels 1040. Accordingly, they may be removed together with the mandrel 1040, when the mandrels 1040 are removed after hardening, in particular of the deformable material, and/or casting of the blade. Two or more hollow chambers may result when the mandrels 1040 are removed. The deformable material 112 may be useful for a more precise mandrel geometry, in particular to adapt the shape of the mandrel 1040 more easily to the inner geometry of the rotor blade 100.

It should be noted that the term "comprising" does not exclude other elements or steps and the use of articles "a" or "an" does not exclude a plurality. Also, elements described for different embodiments may be combined. It should also be noted that reference signs in the claims should not be construed as limiting the scope of the claims.

## Claims

1. A method of manufacturing a rotor blade (100) for a wind turbine, the method comprising
forming an outer shell portion (115) of the rotor blade (100) at least partially surrounding a cavity (114);
arranging a deformable material (112) in the cavity (114) ;
melting the deformable material (112) before hardening the deformable material (112); and
hardening the deformable material (112) in the cavity (114);
wherein the shape of the deformable material (112) adapts to the shape of the cavity (114).

2. The method according to the preceding claim, wherein the cavity (114) is adjacent to a trailing edge (110) of the rotor blade (100).

3. The method according to any one of the preceding claims, wherein the deformable material (112) is isotropically deformable.

4. The method according to any one of the preceding claims, wherein the deformable material (112) comprises a granular material.

5. The method according to the preceding claim, wherein the granular material comprises at least one of cylindrical granules (113), spherical granules (113) and flaky granules (113) .

6. The method according to any one of the preceding claims, wherein the deformable material (112) comprises an additive, which causes the deformable material (112) to expand upon heat activation.

7. The method according to any one of the preceding claims, wherein arranging the deformable material (112) in the cavity (114) comprises at least one of
arranging at least two types of deformable material (112) in the cavity (114) so that the at least two types of deformable material (114) are spatially separated, in particular arranged in different layers (816, 817); and
arranging a rigid core layer (918) in the cavity (114) adjacent to the deformable material (112).

8. The method according to any one of the preceding claims, wherein arranging the deformable material (112) in the cavity (114) comprises arranging at least one bag (220) containing at least some of the deformable material (112) in the cavity (114) .

9. The method according to the preceding claim, wherein the bag (220) has a plurality of holes (221), wherein the holes (221) are small enough to prevent the deformable material (112) from leaking.

10. The method according to any one of claims 8 and 9, wherein arranging the at least one bag (220) in the cavity (114) comprises arranging at least two bags (220) in the cavity (112) wherein each of the bags (220) contains a different type of deformable material (114).

11. The method according to any one of the preceding claims, wherein melting refers to a glass transition.

12. The method according to any one of the preceding claims, wherein melting the deformable material (112) comprises heating the deformable material (112) to a melting temperature, in particular a glass transition temperature, wherein the melting temperature is smaller than a casting temperature of the rotor blade (100).

13. An intermediate-product rotor blade (100) for a wind turbine, the intermediate-product rotor blade (100) comprising
an outer shell portion (115) of the intermediate-product rotor blade (100);
a cavity (114) at least partially surrounded by the outer shell portion (115); and
a deformable material (112) arranged in the cavity (114);
wherein the deformable material (112) is configured to be melted before being hardened in the final-product rotor blade (100) adapting its shape to the shape of the cavity (114).

## Patentansprüche

1. Verfahren zur Herstellung einer Rotorschaufel (100) für eine Windturbine, wobei das Verfahren umfasst:
Ausbilden eines äußeren Schalenabschnitts (115) der Rotorschaufel (100), der mindestens teilweise einen Hohlraum (114) umgibt;
Anordnen eines verformbaren Materials (112) in dem Hohlraum (114);
Schmelzen des verformbaren Materials (112) vor dem Aushärten des verformbaren Materials (112); und
Aushärten des verformbaren Materials (112) in dem Hohlraum (114); wobei sich die Form des verformbaren Materials (112) an die Form des Hohlraums (114) anpasst.

2. Verfahren nach dem vorhergehenden Anspruch, wobei sich der Hohlraum (114) angrenzend an eine Hinterkante (110) der Rotorschaufel (100) befindet.

3. Verfahren nach einem der vorhergehenden Ansprüche, wobei das verformbare Material (112) isotrop verformbar ist.

4. Verfahren nach einem der vorhergehenden Ansprüche, wobei das verformbare Material (112) ein granulares Material umfasst.

5. Verfahren nach dem vorhergehenden Anspruch, wobei das granulare Material mindestens eines von zylindrischen Granulaten (113), kugelförmigen Granulaten (113) und flockigen Granulaten (113) umfasst.

6. Verfahren nach einem der vorhergehenden Ansprüche, wobei das verformbare Material (112) einen Zusatzstoff umfasst, der bewirkt, dass sich das verformbare Material (112) bei Wärmeaktivierung ausdehnt.

7. Verfahren nach einem der vorhergehenden Ansprüche, wobei das Anordnen des verformbaren Materials (112) in dem Hohlraum (114) mindestens eines umfasst von:
Anordnen von mindestens zwei Arten von verformbarem Material (112) in dem Hohlraum (114), sodass die mindestens zwei Arten von verformbarem Material (114) räumlich getrennt, insbesondere in verschiedenen Schichten (816, 817), angeordnet sind; und
Anordnen einer starren Kernschicht (918) in dem Hohlraum (114) angrenzend an das verformbare Material (112).

8. Verfahren nach einem der vorhergehenden Ansprüche, wobei das Anordnen des verformbaren Materials (112) in dem Hohlraum (114) das Anordnen mindestens eines Beutels (220), der mindestens einen Teil des verformbaren Materials (112) enthält, in dem Hohlraum (114) umfasst.

9. Verfahren nach dem vorhergehenden Anspruch, wobei der Beutel (220) eine Vielzahl von Löchern (221) aufweist, wobei die Löcher (221) klein genug sind, um ein Austreten des verformbaren Materials (112) zu verhindern.

10. Verfahren nach einem der Ansprüche 8 und 9, wobei das Anordnen des mindestens einen Beutels (220) in dem Hohlraum (114) das Anordnen von mindestens zwei Beuteln (220) in dem Hohlraum (112) umfasst, wobei jeder der Beutel (220) eine andere Art von verformbarem Material (114) enthält.

11. Verfahren nach einem der vorhergehenden Ansprüche, wobei sich das Schmelzen auf einen Glasübergang bezieht.

12. Verfahren nach einem der vorhergehenden Ansprüche, wobei das Schmelzen des verformbaren Materials (112) das Erhitzen des verformbaren Materials (112) auf eine Schmelztemperatur, insbesondere eine Glasübergangstemperatur, umfasst, wobei die Schmelztemperatur kleiner als eine Gießtemperatur der Rotorschaufel (100) ist.

13. Zwischenprodukt-Rotorschaufel (100) für eine Windturbine, wobei die Zwischenprodukt-Rotorschaufel (100) umfasst:
einen äußeren Schalenabschnitt (115) der Zwischenprodukt-Rotorschaufel (100);
einen Hohlraum (114), der mindestens teilweise durch den äußeren Schalenabschnitt (115) umgeben ist; und
ein verformbares Material (112), das in dem Hohlraum (114) angeordnet ist;
wobei das verformbare Material (112) dazu ausgelegt ist, geschmolzen zu werden, bevor es in der Endprodukt-Rotorschaufel (100) ausgehärtet wird, um seine Form an die Form des Hohlraums (114) anzupassen.

## Revendications

1. Procédé de fabrication d'une pale de rotor (100) pour une éolienne, le procédé comprenant
former une partie coque externe (115) de la pale de rotor (100) entourant au moins partiellement une cavité (114) ;
agencer un matériau déformable (112) dans la cavité (114) ;
faire fondre le matériau déformable (112) avant de durcir le matériau déformable (112) ; et
durcir le matériau déformable (112) dans la cavité (114) ;
dans lequel la forme du matériau déformable (112) s'adapte à la forme de la cavité (114).

2. Procédé selon la revendication précédente, dans lequel la cavité (114) est adjacente à un bord de fuite (110) de la pale de rotor (100).

3. Procédé selon l'une quelconque des revendications précédentes, dans lequel le matériau déformable (112) est déformable de manière isotrope.

4. Procédé selon l'une quelconque des revendications précédentes, dans lequel le matériau déformable (112) comprend un matériau granulaire.

5. Procédé selon la revendication précédente, dans lequel le matériau granulaire comprend au moins un parmi des granulés cylindriques (113), des granulés sphériques (113) et des granulés floconneux (113).

6. Procédé selon l'une quelconque des revendications précédentes, dans lequel le matériau déformable (112) comprend un additif qui provoque la dilatation du matériau déformable (112) lors d'une activation thermique.

7. Procédé selon l'une quelconque des revendications précédentes, dans lequel l'agencement du matériau déformable (112) dans la cavité (114) comprend au moins un parmi
l'agencement d'au moins deux types de matériau déformable (112) dans la cavité (114) de sorte que les au moins deux types de matériau déformable (114) soient spatialement séparés, en particulier agencés en différentes couches (816, 817) ; et
l'agencement d'une couche centrale rigide (918) dans la cavité (114) adjacente au matériau déformable (112).

8. Procédé selon l'une quelconque des revendications précédentes, dans lequel l'agencement du matériau déformable (112) dans la cavité (114) comprend l'agencement d'au moins un sac (220) contenant au moins une partie du matériau déformable (112) dans la cavité (114).

9. Procédé selon la revendication précédente, dans lequel le sac (220) a une pluralité de trous (221), dans lequel les trous (221) sont suffisamment petits pour empêcher le matériau déformable (112) de fuir.

10. Procédé selon l'une quelconque des revendications 8 et 9, dans lequel l'agencement de l'au moins un sac (220) dans la cavité (114) comprend l'agencement d'au moins deux sacs (220) dans la cavité (112) dans laquelle chacun des sacs (220) contient un type différent de matériau déformable (114).

11. Procédé selon l'une quelconque des revendications précédentes, dans lequel la fusion fait référence à une transition vitreuse.

12. Procédé selon l'une quelconque des revendications précédentes, dans lequel la fusion du matériau déformable (112) comprend le chauffage du matériau déformable (112) à une température de fusion, notamment une température de transition vitreuse, dans lequel la température de fusion est inférieure à une température de coulée de la pale de rotor (100).

13. Pale de rotor de produit intermédiaire (100) pour une éolienne, la pale de rotor de produit intermédiaire (100) comprenant
une partie coque externe (115) de la pale de rotor de produit intermédiaire (100) ;
une cavité (114) entourée au moins partiellement par la partie coque externe (115) ; et
un matériau déformable (112) agencé dans la cavité (114) ;
dans laquelle le matériau déformable (112) est configuré pour être fondu avant d'être durci sous la forme de la pale de rotor de produit final (100), adaptant sa forme à la forme de la cavité (114).
